# EUROPEAN PATENT APPLICATION

(11) **EP 4 509 889 A1**
(43) Date of publication of application: **19.02.2025**
(21) Application number: 24193425.6
(22) Date of filing: 07.08.2024
(51) Int. Cl.: G02B 5/18

(54) **DIFFRACTIVE OPTICAL STRUCTURES AND METHODS FOR MANUFACTURING SAME**

(30) Priority: 16.08.2023 US 202318450503
(71) Applicant: Raytheon Company, Tewksbury, MA 01876 (US)
(72) Inventor: CRIFASI, Joseph, Richardson, 75081 (US); SCHAEFER, John P, Richardson, 75081 (US)
(74) Representative: Dentons UK and Middle East LLP

(57) **Abstract**

An diffractive optical element article and a method for manufacturing the diffractive optical element article is disclosed where the optical grating article includes a bulk material substrate (102) having a bulk material surface and a Bulk Material (BM) index of refraction, an amorphous material film layer (104) deposited onto the bulk material surface, the amorphous material film layer having a film thickness and an amorphous material film layer index of refraction and a plurality of diffractive optical elements machined into the amorphous material film layer, wherein each of the plurality of diffractive optical elements include a diffractive optical element thickness and a diffractive optical element profile.

## Description

### BACKGROUND

The present disclosure relates to spectrometers, and more particularly to the diffractive optical structures such as diffractive gratings used in spectrometers.

In the broadest sense, a spectrometer is a device which receives an input light signal, introduces the input light signal to an optical grating which separates the input light signal into its different wavelength components and outputs an output light signal which is spread out, or dispersed, in space according to the different wavelength components, or colors (i.e., called the spectrum) of the output light signal. The spectrometer typically includes a detector which analyzes the spectrum of the output light signal to quantify the amount of each wavelength component that is present in the output light signal spectrum.

Gratings are fine pitched structures that are formed on the surface of a material and that have sharp edges and tight tolerance angles. Their manufacture is difficult, and their efficiency is typically based on the tight angle tolerances and the sharpness of the defined edges. When constructing a monolithic spectrometer, making the grating integral to the spectrometer body reduces part count, improves location accuracy, improves efficiency of the system, and eliminates issues related to grating mounting and retention over a temperature range. Unfortunately, however, traditional gratings are usually machined into softer materials, such as nickel and copper, while machining gratings into crystalline materials is problematic due to the variable grain structure of the material. Accordingly, gratings machined into crystalline materials have a higher risk of quality control issues which result in the crystalline material having lower quality gratings being discarded.

### SUMMARY

A diffractive optical element article includes a bulk material substrate having a bulk material surface and a Bulk Material (BM) index of refraction, an amorphous material film layer deposited onto the bulk material surface, the amorphous material film layer having a film thickness and an amorphous material film layer index of refraction and a plurality of diffractive optical elements machined into the amorphous material film layer, wherein each of the plurality of diffractive optical elements include a diffractive optical element thickness and a diffractive optical element profile.

In addition to one or more of the features described above, or as an alternative to any of the foregoing embodiments, the plurality of diffractive optical elements include a plurality of diffraction gratings.

In addition to one or more of the features described above, or as an alternative to any of the foregoing embodiments, the diffractive optical element includes a spectral film coating, wherein the spectral film coating is deposited onto the amorphous material film layer to cover the plurality of diffractive optical elements, wherein the spectral film coating is at least one of reflective or transmissive.

In addition to one or more of the features described above, or as an alternative to any of the foregoing embodiments, the bulk material surface is polished to create a predetermined shape and accuracy.

In addition to one or more of the features described above, or as an alternative to any of the foregoing embodiments, wherein the bulk material substrate is a multi-spectral (M/S) Zinc Sulfide (ZnS) material and the amorphous material film layer is an amorphous ZnS material.

In addition to one or more of the features described above, or as an alternative to any of the foregoing embodiments, wherein the plurality of diffractive optical elements are a plurality of gratings, wherein each of the plurality of gratings are machined into the amorphous material film layer to include a grating spacing, a grating thickness, and at least one blaze surface.

In addition to one or more of the features described above, or as an alternative to any of the foregoing embodiments, wherein the at least one blaze surface includes a first blaze surface having a first blaze surface width, and a second blaze surface, having a second blaze surface width.

In addition to one or more of the features described above, or as an alternative to any of the foregoing embodiments, wherein the bulk material surface includes at least one of a flat bulk material surface, a curved bulk material surface, a spherical bulk material surface, an aspheric bulk material surface or a freeform bulk material surface.

In addition to one or more of the features described above, or as an alternative to any of the foregoing embodiments, wherein the BM index of refraction and the amorphous material film layer index of refraction are matched and are selected to operate at a predetermined wavelength.

In addition to one or more of the features described above, or as an alternative to any of the foregoing embodiments, the bulk material substrate includes a bulk material substrate thickness which ranges from about 1mm to greater than 3 inches.

In addition to one or more of the features described above, or as an alternative to any of the foregoing embodiments, wherein the amorphous material film layer includes one of Zinc Selenide, Germanium, Magnesium Fluoride, Barium Fluoride, Calcium Fluoride, Silicon, Gallium Arsenide, Chalcogenide glasses, and Magnesium Oxide.

In addition to one or more of the features described above, or as an alternative to any of the foregoing embodiments, wherein the bulk material surface includes a cut surface cut into the bulk material substrate using a slow tool servo method or a fast tool servo method, wherein the cut surface is polished to create a predetermined shape and accuracy.

In addition to one or more of the features described above, or as an alternative to any of the foregoing embodiments, wherein the plurality of diffractive optical elements include a plurality of diffractive rings, wherein each of the plurality of diffractive rings are machined into the amorphous material film layer to include an element spacing and an element thickness.

A method for manufacturing a diffractive optical element article having a bulk material substrate, an amorphous material film layer and a plurality of diffractive optical elements machined into the amorphous material film layer is provided and includes cutting the bulk material substrate to create a bulk material surface, depositing an amorphous material film layer constructed from an amorphous material onto the bulk material surface, wherein the amorphous material film layer includes an amorphous material film layer thickness and machining a plurality of diffractive optical elements into the amorphous material film layer, wherein the plurality of diffractive optical elements include a diffractive optical element spacing and a diffractive optical element thickness.

In addition to one or more of the features described above, or as an alternative to any of the foregoing embodiments, further including polishing the bulk material surface to create a polished, bulk material surface having a desired shape and accuracy, and testing the polished, bulk material surface for Intermediate Wavefront Verification (IWV) to confirm a 100% Total Internal Refraction/Reflection, wherein the testing is performed prior to depositing the amorphous material film layer onto the bulk material surface.

In addition to one or more of the features described above, or as an alternative to any of the foregoing embodiments, further including depositing a spectral film coating onto the amorphous material film layer to cover the plurality of diffractive optical elements.

In addition to one or more of the features described above, or as an alternative to any of the foregoing embodiments, wherein cutting the bulk material includes obtaining the bulk material substrate, and machining a plurality of diffractive optical elements includes machining a plurality of gratings or diffractive rings, wherein each of the plurality of gratings include a first blaze surface and a second blaze surface.

In addition to one or more of the features described above, or as an alternative to any of the foregoing embodiments, wherein depositing a spectral film coating includes inspecting the plurality of diffractive optical elements to confirm accuracy prior to depositing the spectral film coating.

In addition to one or more of the features described above, or as an alternative to any of the foregoing embodiments, wherein the bulk material substrate is a multi-spectral (M/S) Zinc Sulfide (ZnS) material and the amorphous material film layer is an amorphous ZnS material.

In addition to one or more of the features described above, or as an alternative to any of the foregoing embodiments, wherein depositing an amorphous material film layer includes depositing at least one of Zinc Selenide, Germanium, Magnesium Fluoride, Barium Fluoride, Calcium Fluoride, Silicon, Gallium Arsenide, Chalcogenide glasses, or Magnesium Oxide.

Additional features and advantages are realized through the techniques of the present disclosure. Other embodiments and aspects of the disclosure are described in detail herein and are considered a part of the claimed disclosure. For a better understanding of the disclosure with the advantages and the features, refer to the description and to the drawings.

### BRIEF DESCRIPTION OF THE SEVERAL VIEWS OF THE DRAWINGS

For a more complete understanding of this disclosure, reference is now made to the following brief description, taken in connection with the accompanying drawings and detailed description, wherein like reference numerals represent like parts:
FIG. 1A is a cross-sectional view of an optical grating article having a bulk substrate and an amorphous material film layer disposed thereon, in accordance with an embodiment;
FIG. 1B is a cross-sectional view of the optical grating article of FIG. 1A having a bulk substrate and an amorphous material film layer having a plurality of gratings machined therein, in accordance with an embodiment;
FIG. 2 is an operational block diagram illustrating a method for manufacturing the optical grating article of FIG. 1B, in accordance with an embodiment; and
FIG. 3 is a perspective view of an IWV optical test layout for testing a portion of the optical grating article of FIG. 1B during fabrication prior to the machining of gratings, in accordance with an embodiment.

### DETAILED DESCRIPTION

In accordance with the invention, a process for making high-fidelity diffractive optical elements in a bulk material where the fine machining would normally be problematic due to the specifications and efficiency desired is provided and disclosed herein. As briefly discussed above, with regards to monolithic spectrometers, gratings, a type of diffractive optical surface, are typically machined into a bulk material. This makes machining gratings into materials that have variable grain structures, such as crystalline materials, difficult given the typically tight tolerances, sharply defined edges and efficiency required.

This disclosure provides a solution to this problem by depositing an amorphous material film layer (e.g., amorphous ZnS) onto a bulk material. The amorphous material film layer is index matched to the bulk material over specified wavelengths. The grating is then fine machined into the amorphous material film layer and not into the bulk material. A spectral film coating (e.g., reflective coating) which provides reflectivity of a desired wavelength or wavelengths, in the case of multiple blazed gratings, may be deposited onto the amorphous material film layer to cover the amorphous material film layer and the gratings. The spectral film (coating) can be reflective and/or transmissive depending on the application. For example, in the case of photochromic coatings, the spectral coating may be both reflective and transmissive depending upon the needs of the system. The method allows for better manufacturability of all the surfaces in the monolith (i.e., the substrate, the amorphous material film layer and the spectral film coating) and not just the grating. Moreover, in the event that the grating is imperfect and does not satisfy the given specifications, this method allows for the surfaces to be re-worked and the gratings to be re-machined. Current methods do not allow for this reworking and bulk material that have imperfect gratings would normally be scrapped and discarded and the monolith would be lost. In fact, the locational tolerances may be so tight, that if any optical surface did not meet specifications, the entire monolith was discarded. The method of the invention will allow for multiple rework attempts by building the surfaces that the gratings or other optical surfaces are machined into back up using amorphous material film coating technology.

The fabrication of high-fidelity gratings in both zinc sulfide (ZnS) and zinc selenide (ZnSe), as well as other crystalline materials, is challenging. Even in prism-grade materials, the grain size of these materials is on the order of about 20-100 µm, typically larger than one grating groove. Machining (i.e., cutting) such a grating with a single-point tool is a long arduous (20 hours) process typically taking on the order of about 20+ hours to complete. Accordingly, thermal control is paramount to maintain grating flatness and consistent depth of cut. However, due to the fracture mechanics of the crystal structure of crystalline materials, chipping and other fracture issues may occur during the machining process that may adversely affect the grating profile and efficiency.

It should be appreciated that the invention will be described herein with regards to an amorphous ZnS material film layer deposited onto a ZnS M/S (multispectral) bulk material. However, other amorphous material film layers and bulk material substrates may be used.

In one embodiment, a film layer of amorphous ZnS is deposited onto a ZnS M/S (multispectral) bulk material. A dual-blaze grating (or other type of grating) may then be machined into the amorphous ZnS film layer by fly-cutting each line of the grating using a single-point diamond tool whose tool angles may be verified using a Scanning Electron Microscope (SEM). The groove height and spacing of the dual-blaze grating may be verified using a Scanning White Light Interferometer (SWLI), and scatterometry may be used to confirm the first-order diffraction design angle as compared to a design target (e.g., a first-order diffraction angle 3.96° as compared to a design target of 3.97°). In another embodiment, the method may be used for all types of diffractive optical elements, such as diffractive rings and/or gratings (ruled, holographic, etc.) having various different design profiles and/or any number of blaze angles, such as for example, a single-blaze grating, tri-glaze grating, etc.

It should be appreciated that adding a layer of amorphous material to a monolithic optical system (or other type of optical system) enables the machining of fine pitched diffractive optical elements where it would be otherwise difficult to impossible to achieve. In an embodiment, the amorphous material film layer should match the index over a desired range of wavelengths or for a specific wavelength. Still, in other embodiments, the amorphous material film layer does not have to be the same material as the bulk material substrate. Additionally, the method reduces the overall costs and increases the manufacturability of the spectrometer and other diffractive optical elements.

In various embodiments, the method may work for any amorphous material film layer materials that may be deposited onto an optical surface and that matches the index of the bulk material substrate over the desired optical wavelengths. These amorphous material film layer materials may include, but are not limited to, Zinc Sulfide (including Chemically Vapor Deposited (CVD) Zinc Sulfide), Zinc Selenide, Germanium, Magnesium Fluoride, Barium Fluoride, Calcium Fluoride, Silicon, Gallium Arsenide, Chalcogenide glasses, Magnesium Oxide and/or other diamond machinable crystalline materials. In other embodiments, the method allows for diamond machining of materials that cannot be traditionally diamond machined (e.g., putting silicon on silicon carbide). Additionally, in still other embodiments, the method may be applied for any type of Diffractive Optical Element (DOE) having various sizes and design profiles which is cut into any type of Bulk Material (BM) surface, such as a flat BM surface, a curved BM surface, a spherical BM surface, an aspheric BM surface and/or a freeform BM surface and including any type of crystalline material. It should be appreciated that as discussed herein, a diffractive optical element may include any type of transmissive/reflective surface, diffraction grating and/or diffractive surface. Furthermore, films may be deposited by physical vapor deposition, evaporative coatings, Ion Assisted E-Beam coating, Ion Beam Sputtered coatings, Magnetron Sputtered coatings, pulsed layer deposition, and/or using chemical deposition techniques like Sol-Gel technology, CVD, plasma Enhanced (PECVD), Atomic Layer deposition (ALD), and/or plating techniques.

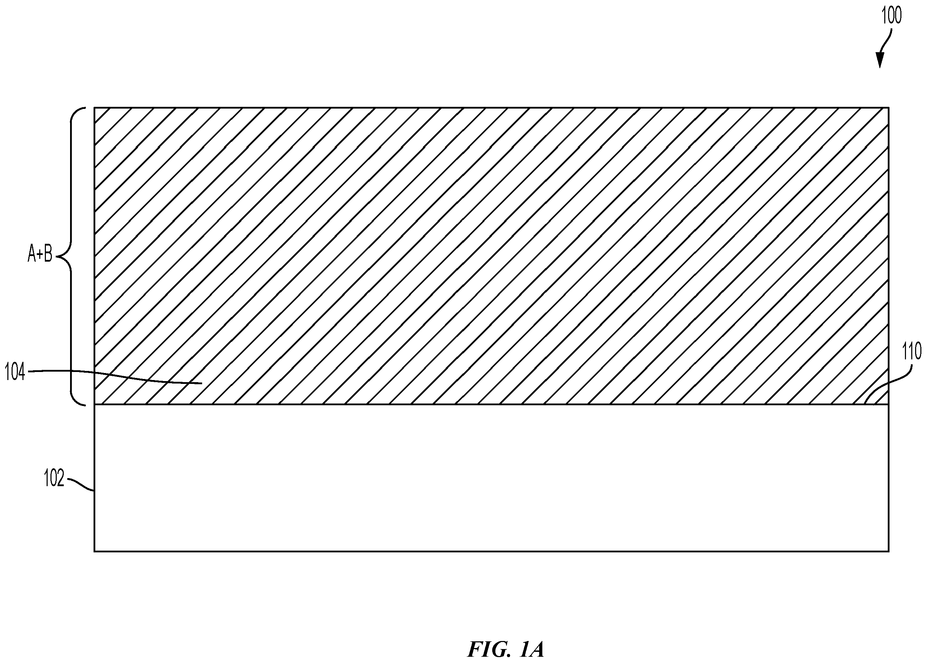

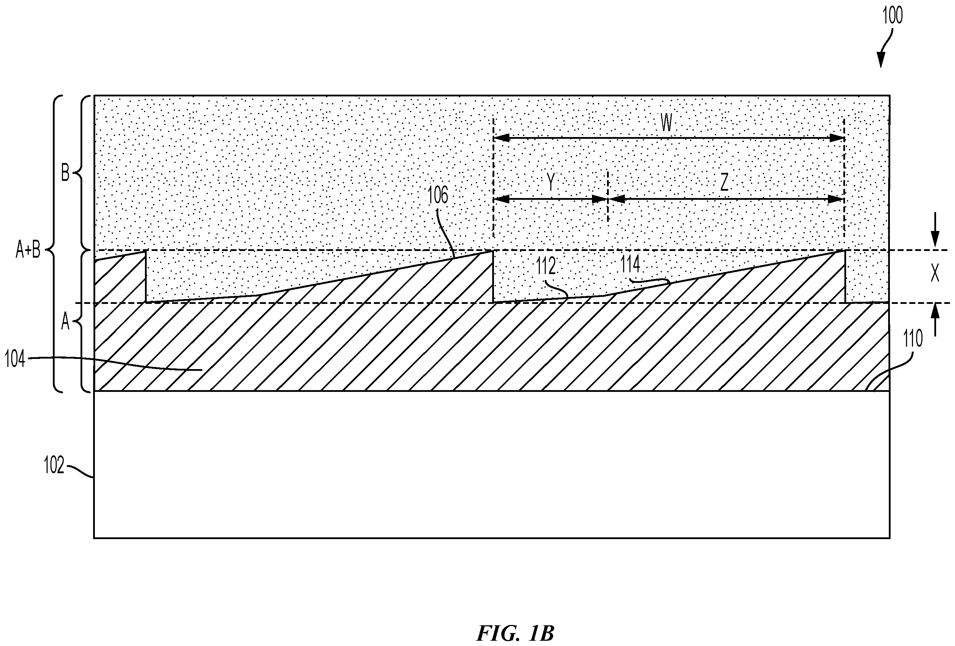

Referring to FIG. 1A, one embodiment of an optical grating article 100 is shown, wherein the optical grating article 100 includes a bulk material substrate 102 and an amorphous material film layer 104 deposited onto the bulk material substrate 102. The thickness A+B of the amorphous material film layer 104 may be chosen based on various parameters, such as the profile of the desired gratings. Referring to FIG. 1B, a plurality of gratings 106 may be machined into the amorphous material film layer 104. A spectral film coating (not shown) constructed of a spectral material (such as a reflective coating) may be deposited onto the amorphous material film layer 104 to cover the plurality of gratings 106, wherein the spectral film coating may be a reflective coating and may be chosen to provide the reflectivity of the desired wavelength or wavelengths in the case of multiple blazed gratings. The bulk substrate 102 can be a Zinc Sulfide (ZnS) multi-spectral (M/S) substrate in one embodiment. The bulk substrate 102 can have a CVD grain size which has a range of about 20µm to about 100µm and can include a polished, cut free-form surface 110. The amorphous material film layer 104 can be constructed from an amorphous ZnS material. However, in other embodiments, the bulk substrate 102 and the amorphous material film layer 104 may be constructed from any material having characteristics suitable to the desired end purpose for operating at a desired wavelength. Moreover, in one embodiment, the plurality of gratings 106 may be machined into the amorphous material film layer 104, where each of the plurality of gratings 106 may include a grating spacing **W,** a grating thickness **X,** a first blaze surface 112 having a first blaze surface width **Y** and a second blaze surface 114 having a second blaze surface width **Z.** In this embodiment, the plurality of gratings 106 are shown as having a grating spacing **W** within the range of about 2µm - 10µm ±0.010µm, a grating thickness **X** within the range of about 0.1µm - 2µm, a first blaze surface 112 having a first blaze surface width **Y** within the range of about 1µm - 10µm ±0.10µm and a second blaze surface 114 having a second blaze surface width **Z** within the range of about 1µm - 10µm ±0.10µm.

It should be appreciated that in other embodiments, the grating spacing **W,** the grating thickness **X,** the first blaze surface width **Y** and the second blaze surface width **Z** may be any size desired suitable to the desired end purpose for operating at a desired wavelength. Moreover, in an embodiment, the bulk substrate 102 and the amorphous material film layer 104 may have matching indexes of refraction and should be selected based on a predetermined wavelength for which the gratings will used. Still, in other embodiments, the indexes of refraction of one or more of the bulk substrate 102 and the amorphous material film layer 104 may not be exact matches, but rather may be selected based on a desired optical operating range, a desired optical resolution and/or a specific application.

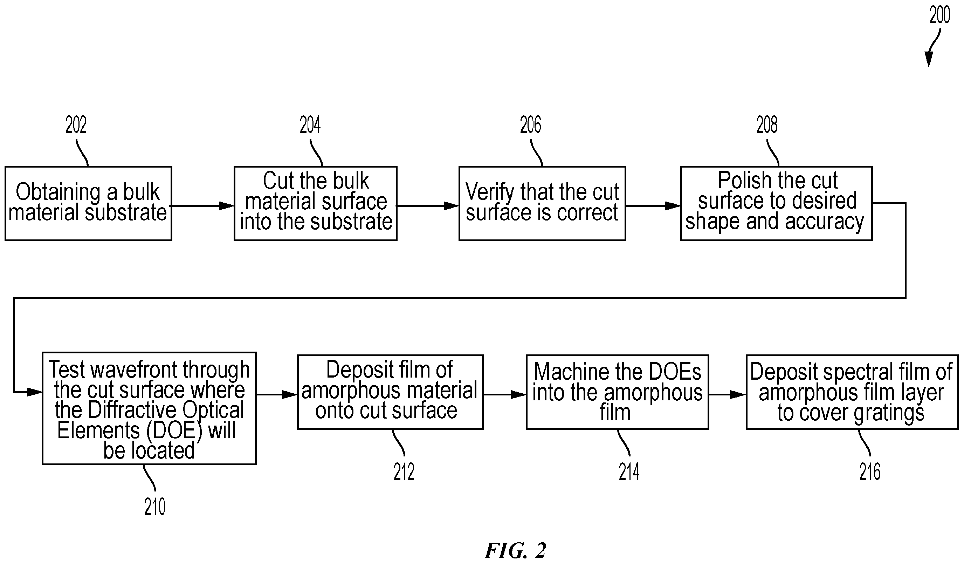

Referring to FIG. 2, an operational block diagram illustrating a method 200 for manufacturing the optical grating article 100 is provided, in accordance with an embodiment. The method 200 includes obtaining a bulk material substrate 102, as shown in operational block 202. Referring to FIG. 1A, in this embodiment, the bulk material may be a multispectral ZnS substrate 102 and may include a variable grain size ranging from between about 20µm to about 100µm. As an example and for the purposes of discussion, consider that the bulk material surface 110 is a free form surface. The method 200 includes cutting the free-form surface 110 into the ZnS substrate 102, as shown in operational block 204. This may be accomplished using free-form DPT production methods, such as a slow-tool servo method or a fast-tool servo method. The slow-tool servo method uses existing lathe axes (with no supplemental equipment needed) and is typically good for high-departure free-form shapes. Whereas, the fast-tool servo method is typically good for mild free-form shapes, but uses an auxiliary voice-coil axis which oscillates the tool along the Z axis. The free-form optics of the cut free-form surface 110 are inspected to verify that the cut free-form surface 110 is correct and the assembly may be checked to measure for Wavefront Error (WFE), as shown in operational block 206. This verification may be accomplished using an interferometric approach, Computer Generated Hologram (CGH) approach and/or a Coordinate-Measuring Machine (CMM) approach depending upon the shape and accuracy of the surface being measured. In the disclosed embodiment, the verification was achieved using the CMM approach, where dense cloud points of the front and back sides were generated and probed using CMM sequentially in the same set up.

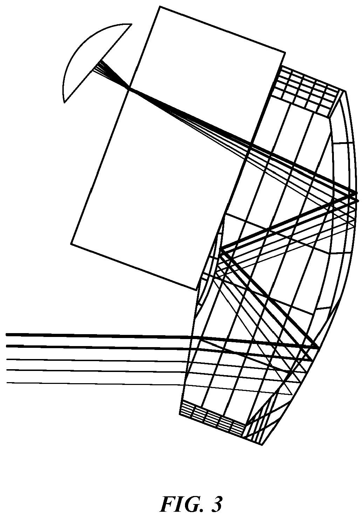

The cut free-form surface 110 was Visual Quality (VQ) polished to achieve the desired shape and accuracy (which also ensures low loss due to scatter), as shown in operational block 208. In this embodiment, this was accomplished using a Magnetorheological finishing (MRF) method which polishes the surface in a computer-controlled magnetorheological finishing slurry. In various embodiments, other polishing methods may be used as desired if the methods are suitable to the desired end purpose. The polished cut free-form surface 110 in the area where the gratings will be located was then tested for Intermediate Wavefront Verification (IWV), as shown in operational block 210, where the IWV test was used to verify performance prediction (TIR < 100% on uncoated surfaces may create contrast variation). One embodiment of the IWV optical test layout is shown in FIG. 3, where a surrogate ZnS M/S substrate is tested before the grating is machined. A material film layer of amorphous ZnS 104 is deposited onto the cut free-form surface 110 of the ZnS M/S 102 to cover the polished area of the cut free-form surface 110, as shown in operational block 212. As shown in FIG. 1A, the material film layer of amorphous ZnS 104 is deposited onto the ZnS M/S substrate 102 to have a material film amorphous layer thickness **A+B,** wherein the material film amorphous layer thickness **A+B** may be responsive to the profile (i.e., thickness) of the gratings and/or diffractive surfaces. A test grating may then be cut into the material film layer of amorphous ZnS 104 and tested to assure that the grating has the proper profile. The test grating may be tested for grating angle validation and/or diffraction efficiency (e.g., in one embodiment using a Bidirectional Reflectance Distribution Function (BDRF) (scatterometer), among other parameters.

Upon validation that the test grating is correct, the plurality of gratings 106 are then machined into the material film layer of amorphous ZnS 104, as shown in operational block 214. Referring to FIG. 1B, in an embodiment, the gratings 206 may be machined to have a predetermined grating spacing **W,** a predetermined grating thickness **X,** a first blaze surface 112 having a predetermined first blaze surface width **Y** and a second blaze surface 114 having a predetermined second blaze surface width **Z.** Once the machined gratings are inspected and confirmed to be accurate, a spectral reflective film coating (not shown) constructed from a spectral reflective material may be deposited onto the material film layer of amorphous ZnS 104 to cover the material film layer of amorphous ZnS 104 and the plurality of gratings 106, as shown in operational block 216. It should be appreciated that the thickness (A+B) of the material film layer of amorphous ZnS 104 prior to machining the gratings 106 was about 10µm and was selected based on the desired grating profile. Accordingly, the initial thickness of the amorphous layer should be selected based on the grating profile.

It is contemplated that in other embodiments the thickness of the material film amorphous layer prior to machining the plurality of gratings 106 may be greater than or less than about 10µm depending upon the grating profile. Accordingly, this allows for a rough cut to the aspheric, spherical, and/or free form surface to get the desired profile prior to machining the grating profile into the surface profile that was just cut. It should be appreciated that, in an embodiment, the bulk material substrate 102 may also have various thicknesses. For example, in one embodiment, the bulk material substrate 102 may be thin (e.g., less than 1mm), while in another embodiment the bulk material substrate 102 may be thick (e.g., greater than several inches). It is at least partially dependent on the application as to how the substrate applies to diffractive optical surfaces. Additionally, the bulk material substrate 102 and the material film amorphous layer 104 should have matching indexes of refraction and should be selected based on the desired spectral range for which the gratings will be used. However, it is contemplated that in other embodiments, the indexes of refraction of one or more of the bulk material substrate 102 and the material film amorphous layer 104 may not be exact matches, but rather may be selected based on the desired optical resolution and/or application.

It should be appreciated that in an embodiment the material film amorphous layer 104 may be polished in certain situations. For example, in the case of reworking other surfaces that are in the hyperspectral imager, the material film amorphous layer 104 may be polished. Also, the material film amorphous layer 104 may be polished if there is a need to remove surface defects prior to machining the plurality of gratings 106. However, after the grating is machined into the material film amorphous layer 104, polishing typically does not occur as the grating profile will be damaged. Additionally, the grating profile may be inspected using an optical profilometer to ensure that the angles and spacing are correct, a high magnification video microscope may also be used to measure the grating period and a functional test may be developed using light to measure the efficiency of the grating at a desired wavelength.

It should be appreciated that the invention does not require or contemplate a stress compensation layer or a binder layer between the amorphous material film layer and the bulk material surface. In this case, adding a stress compensation layer and a binder layer would adversely affect the efficiency of the hyperspectral system. Having index matched materials (such as, in one embodiment, amorphous ZnS on a crystalline ZnS bulk material) directly contacting each other allows for a "perfect" internal reflection to be maintained. If light had to travel through a stress compensation layer and a binder layer to get to the diffractive optical element, then the assumed internal reflection would not be achievable and the hyperspectral system would not be as efficient.

Some of the processing steps illustrated in Fig. 2 and discussed above are optional and may not be necessary in all embodiments. For example, in some embodiments, the step 206 of verifying the cut surface, polishing 208, testing 210 are optional and not critical to the machining of DOEs into the amorphous film. As another example, in some embodiments, one may start from a bulk material with a cut surface that may or may not have been polished. Thus, in some embodiments, step 204 may also be optional in addition to one or more other processing steps.

Moreover, the invention allows for all of the surfaces that are finished prior to machining the plurality of gratings in the material film amorphous layer to be reworked by removing the index matching film and re-depositing the index matching film and reworking the surfaces built up in the film multiple times if necessary. Any of the half dozen surfaces built up during the process could be bad scrapping the entire monolith. The film allows them all to be reworked multiple times. Thus, the surface having the plurality of gratings can be cut off, and re-applied if the grating profile was not good enough. It should be appreciated that although the invention is disclosed herein with regards to a particular CVD grain size range, the invention may be used with any type of material suitable to the desired end purpose, such as materials having a different CVD grain size range and/or any type of crystalline/monocrystalline material (i.e., IR crystal).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form detailed. Many modifications and variations will be apparent to those of ordinary skill in the art without departing from the scope and spirit of the disclosure. Moreover, the embodiments or parts of the embodiments may be combined in whole or in part without departing from the scope of the invention. The embodiments were chosen and described in order to best explain the principles of the disclosure and the practical application, and to enable others of ordinary skill in the art to understand the various embodiments with various modifications as are suited to the particular use contemplated.

While the preferred embodiments have been described, it will be understood that those skilled in the art, both now and in the future, may make various improvements and enhancements which fall within the scope of the claims which follow. These claims should be construed to maintain the proper protection for the disclosure as first described.

Aspects of the invention are set out in the following numbered clauses:
Clause 1. A diffractive optical element article, comprising:
   a bulk material substrate having a bulk material surface and a Bulk Material (BM) index of refraction;
   an amorphous material film layer deposited directly onto the bulk material surface, the amorphous material film layer having a film thickness and an amorphous material film layer index of refraction; and
   a plurality of diffractive optical elements machined into the amorphous material film layer, wherein each of the plurality of diffractive optical elements include a diffractive optical element thickness and a diffractive optical element profile.
Clause 2. The diffractive optical element article of clause 1, wherein the plurality of diffractive optical elements include a plurality of diffraction gratings.
Clause 3. The diffractive optical element article of clause 1, further comprising a spectral film coating, wherein the spectral film coating is deposited onto the amorphous material film layer to cover the plurality of diffractive optical elements, wherein the spectral film coating is at least one of reflective or transmissive.
Clause 4. The diffractive optical element article of clause 1, wherein the bulk material surface is polished to create a predetermined shape and accuracy, and wherein the amorphous material film layer is indexed matched to the bulk material substrate at desired wavelengths of operation.
Clause 5. The diffractive optical element article of clause 1, wherein:
   the bulk material substrate is a multi-spectral (M/S) Zinc Sulfide (ZnS) material and,
   the amorphous material film layer is an amorphous ZnS material.
Clause 6. The diffractive optical element article of clause 1, wherein the plurality of diffractive optical elements are a plurality of gratings, wherein each of the plurality of gratings are machined into the amorphous material film layer to include a grating spacing, a grating thickness, and at least one blaze surface.
Clause 7. The diffractive optical element article of clause 6, wherein the at least one blaze surface includes,
   a first blaze surface having a first blaze surface width, and
   a second blaze surface, having a second blaze surface width.
Clause 8. The diffractive optical element article of clause 7, wherein the bulk material surface includes at least one of a flat bulk material surface, a curved bulk material surface, a spherical bulk material surface, an aspheric bulk material surface or a freeform bulk material surface.
Clause 9. The diffractive optical element article of clause 1, wherein the BM index of refraction and the amorphous material film layer index of refraction are matched and are selected to operate at a predetermined wavelength.
Clause 10. The diffractive optical element article of clause 1, wherein the bulk material substrate includes a bulk material substrate thickness which ranges from about 1mm to greater than 3 inches.
Clause 11. The diffractive optical element article of clause 1, wherein the amorphous material film layer comprises one of: Zinc Selenide, Germanium, Magnesium Fluoride, Barium Fluoride, Calcium Fluoride, Silicon, Gallium Arsenide, Chalcogenide glasses, and Magnesium Oxide.
Clause 12. The diffractive optical element article of clause 1, wherein the bulk material surface comprises:
   a cut surface cut into the bulk material substrate using a slow tool servo method or a fast tool servo method,
   wherein the cut surface is polished to create a predetermined shape and accuracy.
Clause 13. The diffractive optical element article of clause 1, wherein the plurality of diffractive optical elements include a plurality of diffractive rings, wherein each of the plurality of diffractive rings are machined into the amorphous material film layer to include an element spacing and an element thickness.
Clause 14. A method for manufacturing a diffractive optical element article having a bulk material substrate, an amorphous material film layer and a plurality of diffractive optical elements machined into the amorphous material film layer, the method comprising:
   cutting the bulk material substrate to create a bulk material surface;
   depositing an amorphous material film layer constructed from an amorphous material directly onto the bulk material surface, wherein the amorphous material film layer is indexed matched to the bulk material substrate at desired wavelengths of operation and includes an amorphous material film layer thickness; and
   machining a plurality of diffractive optical elements into the amorphous material film layer, wherein the plurality of diffractive optical elements include a diffractive optical element spacing and a diffractive optical element thickness.
Clause 15. The method of clause 14, further comprising:
   polishing the bulk material surface to create a polished, bulk material surface having a desired shape and accuracy; and
   testing the polished, bulk material surface for Intermediate Wavefront Verification (IWV) to confirm a 100% Total Internal Refraction/Reflection, wherein said testing is performed prior to depositing the amorphous material film layer onto the bulk material surface.
Clause 16. The method of clause 14, further comprising:
   depositing a spectral film coating onto the amorphous material film layer to cover the plurality of diffractive optical elements.
Clause 17. The method of clause 14, wherein:
   cutting the bulk material includes obtaining the bulk material substrate; and
   machining a plurality of diffractive optical elements includes machining a plurality of gratings or diffractive rings wherein each of the plurality of gratings include a first blaze surface and a second blaze surface.
Clause 18. The method of clause 16, wherein depositing a spectral film coating includes inspecting the plurality of diffractive optical elements to confirm accuracy prior to depositing the spectral film coating.
Clause 19. The method of clause 14, wherein:
   the bulk material substrate is a multi-spectral (M/S) Zinc Sulfide (ZnS) material and,
   the amorphous material film layer is an amorphous ZnS material.
Clause 20. The method of clause 14, wherein depositing an amorphous material film layer comprises depositing at least one of: Zinc Selenide, Germanium, Magnesium Fluoride, Barium Fluoride, Calcium Fluoride, Silicon, Gallium Arsenide, Chalcogenide glasses, or Magnesium Oxide.

## Claims

1. A diffractive optical element article, comprising:
a bulk material substrate having a bulk material surface and a Bulk Material (BM) index of refraction;
an amorphous material film layer deposited directly onto the bulk material surface, the amorphous material film layer having a film thickness and an amorphous material film layer index of refraction; and
a plurality of diffractive optical elements machined into the amorphous material film layer, wherein each of the plurality of diffractive optical elements include a diffractive optical element thickness and a diffractive optical element profile.

2. The diffractive optical element article of claim 1, wherein the plurality of diffractive optical elements include a plurality of diffraction gratings.

3. The diffractive optical element article of claim 1 or claim 2, further comprising a spectral film coating, wherein the spectral film coating is deposited onto the amorphous material film layer to cover the plurality of diffractive optical elements, wherein the spectral film coating is at least one of reflective or transmissive.

4. The diffractive optical element article of any preceding claim, wherein the bulk material surface is polished to create a predetermined shape and accuracy, and wherein the amorphous material film layer is indexed matched to the bulk material substrate at desired wavelengths of operation.

5. The diffractive optical element article of any preceding claim, wherein:
the bulk material substrate is a multi-spectral (M/S) Zinc Sulfide (ZnS) material and,
the amorphous material film layer is an amorphous ZnS material.

6. The diffractive optical element article of claim 1, wherein the plurality of diffractive optical elements are a plurality of gratings, wherein each of the plurality of gratings are machined into the amorphous material film layer to include a grating spacing, a grating thickness, and at least one blaze surface; and
preferably, wherein the at least one blaze surface includes,
a first blaze surface having a first blaze surface width, and
a second blaze surface, having a second blaze surface width; and
preferably, wherein the bulk material surface includes at least one of a flat bulk material surface, a curved bulk material surface, a spherical bulk material surface, an aspheric bulk material surface or a freeform bulk material surface.

7. The diffractive optical element article of any preceding claim, wherein the BM index of refraction and the amorphous material film layer index of refraction are matched and are selected to operate at a predetermined wavelength; and/or
wherein the bulk material substrate includes a bulk material substrate thickness which ranges from about 1mm to greater than 3 inches.

8. The diffractive optical element article of any one of claims 1 to 4, wherein the amorphous material film layer comprises one of: Zinc Selenide, Germanium, Magnesium Fluoride, Barium Fluoride, Calcium Fluoride, Silicon, Gallium Arsenide, Chalcogenide glasses, and Magnesium Oxide.

9. The diffractive optical element article of any preceding claim, wherein the bulk material surface comprises:
a cut surface cut into the bulk material substrate using a slow tool servo method or a fast tool servo method,
wherein the cut surface is polished to create a predetermined shape and accuracy.

10. The diffractive optical element article of any preceding claim, wherein the plurality of diffractive optical elements include a plurality of diffractive rings, wherein each of the plurality of diffractive rings are machined into the amorphous material film layer to include an element spacing and an element thickness.

11. A method for manufacturing a diffractive optical element article having a bulk material substrate, an amorphous material film layer and a plurality of diffractive optical elements machined into the amorphous material film layer, the method comprising:
cutting the bulk material substrate to create a bulk material surface;
depositing an amorphous material film layer constructed from an amorphous material directly onto the bulk material surface, wherein the amorphous material film layer is indexed matched to the bulk material substrate at desired wavelengths of operation and includes an amorphous material film layer thickness; and
machining a plurality of diffractive optical elements into the amorphous material film layer, wherein the plurality of diffractive optical elements include a diffractive optical element spacing and a diffractive optical element thickness.

12. The method of claim 11, further comprising:
polishing the bulk material surface to create a polished, bulk material surface having a desired shape and accuracy; and
testing the polished, bulk material surface for Intermediate Wavefront Verification (IWV) to confirm a 100% Total Internal Refraction/Reflection, wherein said testing is performed prior to depositing the amorphous material film layer onto the bulk material surface.

13. The method of claim 11 or claim 12, further comprising:
depositing a spectral film coating onto the amorphous material film layer to cover the plurality of diffractive optical elements; and
preferably, wherein depositing a spectral film coating includes inspecting the plurality of diffractive optical elements to confirm accuracy prior to depositing the spectral film coating.

14. The method of any one of claims 11 to 13, wherein:
cutting the bulk material includes obtaining the bulk material substrate; and
machining a plurality of diffractive optical elements includes machining a plurality of gratings or diffractive rings wherein each of the plurality of gratings include a first blaze surface and a second blaze surface.

15. The method of any one of claims 11 to 14, wherein:
the bulk material substrate is a multi-spectral (M/S) Zinc Sulfide (ZnS) material and,
the amorphous material film layer is an amorphous ZnS material; and/or
wherein depositing an amorphous material film layer comprises depositing at least one of: Zinc Selenide, Germanium, Magnesium Fluoride, Barium Fluoride, Calcium Fluoride, Silicon, Gallium Arsenide, Chalcogenide glasses, or Magnesium Oxide.
